# EUROPÄISCHE PATENTANMELDUNG

(11) **EP 1 129 914 A2**
(43) Veröffentlichungstag der Anmeldung: **05.09.2001**
(21) Anmeldenummer: 01103619.1
(22) Anmeldetag: 22.02.2001
(51) Int. Cl.: B60S 1/52, B60Q 1/00

(54) **Reinigungsvorrichtung für einen Scheinwerfer eines Kraftfahrzeugs**

(30) Priorität: 02.03.2000 DE 10010029
(71) Anmelder: Volkswagen Aktiengesellschaft, 38436 Wolfsburg (DE)
(72) Erfinder: Ackermann, Frank, 38154 Königslutter/Lauingen (DE)

(57) **Zusammenfassung**

Die Erfindung betrifft eine Reinigungsvorrichtung (1a) für einen Scheinwerfer (2) eines Kraftfahrzeugs, mit einem Reinigungselement (17) für eine Scheibe des Scheinwerfers (2), das durch einen Antrieb (11b) zwischen einer Parkstellung, in der es hinter einer Öffnung (9) in der Karosserie (7) des Kraftfahrzeugs angeordnet ist, und einer Arbeitsstellung, in der es sich vor der Öffnung (9) befindet, bewegbar ist, einem Verschlußglied (11) für die Öffnung (9), das durch einen Antrieb (15) zwischen einer Offenstellung und einer Schließstellung bewegbar ist, und einer elektrischen Steuereinrichtung (S), die nach einer Betätigung eines ersten Betätigungselements (E) die Funktionsbewegungen und die Funktionszeit der Reinigungsvorrichtung (1a) steuert. Um ein handhabungsfreundliches Öffnen des Verschlußgliedes und einen Zugang zur Öffnung zu erreichen, weist die Steuereinrichtung (S) ein zweites Betätigungselement (E1) auf, bei dessen Betätigung die Steuereinrichtung (S) das Verschlußglied (11) in eine Servicestellung bewegt, in der das Verschlußglied (11) sich in seiner Offenstellung befindet oder sich in einer teilgeöffneten Stellung befindet, aus der es in die Offenstellung bewegbar ist, wobei in der Offenstellung die Öffnung (9) manuell zugänglich ist.

## Beschreibung

Es sind Reinigungsvorrichtungen für die Scheinwerfer von Kraftfahrzeugen durch offenkundige Vorbenutzung bereits bekannt geworden, bei denen ein Scheibenwischer und/oder eine Spritzdüse in einer solchen Position in der Nähe des jeweiligen Scheinwerfers angeordnet ist bzw. sind, daß die Scheinwerfer während der Fahrt gereinigt werden können. Um bei solchen Reinigungsvorrichtungen den Fahrtluftwiderstand und Fahrtwindgeräusche zu verringern bzw. zu vermeiden, ist bereits eine Scheibenreinigungsanlage vorgeschlagen worden, bei der das Reinigungselement, z.B. eine Spritzdüse, mit ihrem Träger zwischen einer durch eine Öffnung aus der Karosserie des Fahrzeugs herausragenden Funktionsstellung in eine hinter der Öffnung befindlichen Parkstellung verstellbar gelagert ist, wobei ein Verschlußglied zum Verschließen der Öffnung vorgesehen ist, das zwischen einer Offenstellung und einer Schließstellung bewegbar ist. In der Parkstellung des Reinigungselements ist die Öffnung geschlossen, so daß das sich hinter dem Verschlußglied befindliche Reinigungselement vor Verschmutzung geschützt ist und Fahrtwindgeräusche vermieden werden. Des weiteren ist bereits vorgeschlagen worden, einen Scheibenreinigungsvorgang mit hintereinander folgenden Schritten elektromechanisch gesteuert automatisch ablaufen zu lassen, wobei außerdem bereits vorgeschlagen worden ist, die Reinigungsvorgänge der beiden Front-Scheinwerfer eines Kraftfahrzeugs nicht gleichseitig sondern nacheinander ablaufen zu lassen, was durch eine zugehörige elektrische oder elektronische Steuereinrichtung ebenfalls automatisch gesteuert wird. Der jeweilige Reinigungsvorgang kann durch manuelle Betätigung eines Betätigungselements eingeleitet werden, wobei die einzelnen Schritte des Reinigungsvorgangs einander folgend automatisch gesteuert werden, nämlich Öffnen des klappenförmigen Verschlussgliedes, Bewegen des Reinigungselements in seine Funktionsstellung, Durchführung des Reinigungsvorgangs über eine bestimmte Zeit, z. B. Ausspritzen des Reinigungsmittels, Bewegen des Reinigungselements in seine Parkstellung und Schließen des Verschlußgliedes. Als Öffnungs- und Schließmechanismus für das Verschlußglied kann eine von innen gegen das Verschlußglied stoßende Schubstange dienen, wobei eine Rückholfeder überdrückt wird, die das selbsttätige Schließen des Verschlußgliedes durch Vorspannen in seine Schließstellung besorgt. Die einzelnen Steuerungsmerkmale und ein zugehöriges Steuerprogramm sind in der elektronischen Steuereinrichtung des Kraftfahrzeugs gespeichert.

Eine solche Scheibenreinigungslage weist den Nachteil auf, daß das willkürliche Öffnen des Verschlußgliedes problematisch ist. Es ist zwar möglich, manuell oder mittels eines Werkzeugs, z. B. eines Schraubenziehers, in den Umfangsspalt des Verschlußgliedes einzugreifen, jedoch besteht hierbei die Gefahr von Lackbeschädigungen und außerdem steht dies der bestehenden Forderung entgegen, den Umfangsspalt möglichst klein auszubilden.

Der Erfindung liegt die Aufgabe zugrunde, eine Reinigungsanlage der vorliegenden Art so auszugestalten, daß ein handhabungsfreundliches Öffnen des Verschlußgliedes und ein Zugang zur Öffnung möglich ist.

Diese Aufgabe wird durch die Merkmale des Anspruchs 1 gelöst. Vorteilhafte Weiterbildungen sind Gegenstand der Unteransprüche.

Die erfindungsgemäße Ausgestaltung nach Anspruch 1 ermöglicht nicht nur ein einfaches und handhabungsfreundliches Öffnen des Verschlußgliedes sondern auch einen Zugang zur bzw. durch die Öffnung, so daß diese als Zugangsöffnung benutzt werden kann, z. B. um den hinter der Zugangsöffnung vorhandenen Raum zu nutzen, z. B. zu kontrollieren oder einen Service an darin angeordneten Teilen oder Geräten durchzuführen. Hierbei kann es sich z. B. um eine Einstellvorrichtung für einen Scheinwerfer und/oder um einen Vorratsbehälter für eine Reinigungsflüssigkeit handeln.

In den Unteransprüchen sind Merkmale enthalten, die die Zugänglichkeit und Funktion der Reinigungsvorrichtung weiter verbessern und zu einfachen Ausgestaltungen führen, die sich vorteilhaft integrieren lassen.

Nachfolgend werden die Erfindung und weitere durch sie erzielbare Vorteile anhand eines bevorzugten Ausführungsbeispiels und einer Zeichnung näher erläutert. Es zeigen
- Fig. 1: eine erfindungsgemäße Reinigungsvorrichtung für einen vorzugsweise einstellbaren Front-Scheinwerfer eines Kraftfahrzeugs in einem längs der Fahrtrichtung und vertikal verlaufenden Teilschnitt durch die Karosserie;
- Fig. 2: eine Einstellvorrichtung in für einen Front-Scheinwerfer in abgewandelter Ausgestaltung im vertikalen Schnitt einer zugehörigen Karosserie.
- Fig. 3: eine erfindungsgemäße Reinigungsvorrichtung für einen vorzugsweise einstellbaren Front-Scheinwerfer eines Kraftfahrzeugs in einem längs der Fahrtrichtung und vertikal verlaufenden Teilschnitt durch die Karosserie.

Bei den Ausführungsbeispielen ist eine in ihrer Gesamtheit mit 1a bezeichnete Reinigungsvorrichtung zum Reinigen der lichtdurchlässigen Scheibe eines Front-Scheinwerfers 2 in Kombination mit einer in ihrer Gesamtheit mit 1b bezeichneten Einstellvorrichtung für den Scheinwerfer 2 angeordnet. Die Reinigungsvorrichtung 1a eignet sich jedoch auch für einen nicht einstellbaren Scheinwerfer 2 oder für Scheinwerfer anderer Ausgestaltung

Die Einstellvorrichtung 1b dient beim vorliegenden Ausführungsbeispiel dazu, den Scheinwerfer 2 einzustellen bzw. zu justieren, wobei es sich vorzugsweise um eine Basiseinstellung handelt, d.h. um eine Einstellung, die vor der Inbetriebnahme des zugehörigen Fahrzeugs 3 und danach in größeren Zeitabständen durchzuführen ist, so daß vorhandene Maßtoleranzen der Karosserie bei einer solchen Einstellung berücksichtigt sind. Die Einstellvorrichtung 1b befindet sich im vorderen Bereich des Fahrzeugs 3. Sie kann jedoch wenigstens teilweise, insbesondere mit einem ein oder mehrere Einstellglieder 4 tragenden Basisteil 6, auch in einem anderen Bereich des Fahrzeugs 3 bzw. seiner Karosserie 7 zugänglich sein.

Die Hauptteile der Einstellvorrichtung 1a sind das Basisteil 6, das das wenigstens eine Einstellglied 4 trägt, ein oder mehrere Verbindungsglieder 8, die jeweils das zugehörige Einstellglied 4 mit dem einstellbaren Scheinwerfer 2 verbinden, eine Zugangsöffnung 9, die den manuellen Zugang zu dem oder den Einstellgliedern 4 ermöglicht, und ein Verschlußglied 11 für die Zugangsöffnung 9. Durch diesen wahlweise zu öffnenden und zu schließenden Verschluß läßt sich je nach Anordnung der Zugangsöffnung 9 im Bereich der Karosserie 7 wenigstens das Einstellglied 4 bzw. das Basisteil 6 vor Verschmutzung, insbesondere während der Fahrt des Fahrzeugs 3, und/oder vor den Blicken eines Betrachters geschützt bzw. verdeckt anordnen. Im ersten Fall wird wenigstens das Einstellglied 4 bzw. werden die zugehörigen Teile der Einstellvorrichtung 1a vor Verschmutzung und daraus resultierender Korrosion geschützt, wodurch die Funktion verbessert und die Lebensdauer verlängert wird. Im zweiten Fall ist das Einstellglied 4 zumindest dann, wenn es nicht benutzt wird, vor den Blicken eines Betrachters verdeckt angeordnet, wodurch das Aussehen des Fahrzeugs 3 und dessen Form und Strömungsverhalten verbessert werden.

Das wenigstens eine Verbindungsglied 8 ist von länglicher Ausgestaltung, so daß das Basisteil 6 mit dem Verbindungsglied 8 in einer vom Scheinwerfer 2 entfernten und handhabungsfreundlichen günstigen Position angeordnet werden kann. Es kann außerdem von flexibler bzw. biegsamer Bauweise sein. Hierdurch ist es möglich, dann, wenn im direkten Abstand zwischen dem Basisteil 6 und dem Scheinwerfer 2 ein anderes Bauteil im Wege ist, dieses Bauteil zu umgehen. Außerdem ermöglicht eine flexible Ausgestaltung des oder der Verbindungsglieder 8 eine wahlweise Positionierung des Basisteils 6, so daß ein und dasselbe Basisteil 6 mit wenigstens einem zugehörigen Verbindungsglied 8 für verschiedene Fahrzeuge bzw. Karosseriekonstruktionen und Einbauabstände verwendbar ist.

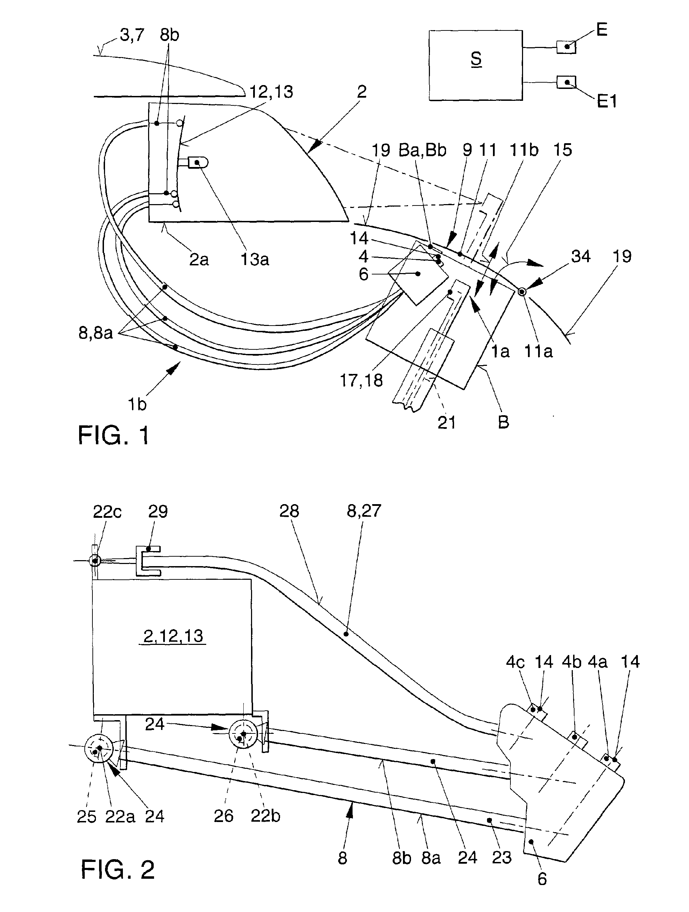

Bei dem oder den Verbindungsgliedern 8 kann es sich um solche handeln, die eine Schub- und Zugbewegung oder eine Drehbewegung übertragen. Dabei können das oder die Verbindungsglieder 8 durch Drehspindeln oder Zugstangen gebildet sein. Beim Ausführungsbeispiel nach Fig. 1, bei dem mehrere verstellbare Verbindungsglieder 8 vorgesehen sind, können diese durch biegsame Wellen oder Bowdenzüge mit Hüllen 8a und darin verschiebbaren Zug- oder auch Schubdrähten 8b gebildet sein.

Beim vorliegenden Ausführungsbeispiel weist der Scheinwerfer 2 wenigstens ein Einstellteil 12 auf, z.B. einen einstellbaren Reflektor 13, wobei die vereinfacht dargestellten Verbindungsglieder 8 am wenigstens einen zugehörigen Einstellteil des Scheinwerfers 2, hier am Reflektor 13, z. B. mit einer Lampe 13a, angreifen, und wobei hier die Hüllen 8a der Verbindungsglieder 8 mit dem Basisteil 6 und einem Gehäuse 2a des Scheinwerfers 2 und die Zug- oder auch Schubelemente 8b mit dem Einstellelement 12 verbunden sind.

Das wenigstens eine Einstellglied 4 weist vorzugsweise ein Werkzeugangriffselement 14 auf, an das ein nicht dargestelltes, vorzugsweise stiftförmiges Betätigungswerkzeug durch die Zugangsöffnung 9 ansetzbar ist.

Das Verschlußglied 11 kann durch eine Klappe gebildet sein, die um ein Scharnier 11a schwenkbar gelagert und durch einen vereinfacht dargestellten Antriebsmechanismus 15 zwischen einer mit sichtbarer Linie dargestellten Schließstellung und einer andeutungsweise dargestellten Offenstellung verstellbar ist, siehe Doppelpfeil 11b.

Die Zugangsöffnung 9, das Verschlußglied 11 und der Antriebsmechanismus 15 sind auch Teile der Reinigungsvorrichtung 1a, die ein Reinigungselement 17 aufweist, hier in Form einer Spritzdüse 18, das durch die Zugangsöffnung 9 hindurch zwischen einer innen angeordneten Parkstellung und einer von der Karosserie 7 vorstehenden strichpunktiert angedeuteten Arbeitsstellung durch einen angedeuteten Antrieb (siehe Doppelpfeil 11b) verstellbar ist. Beim vorliegenden Ausführungsbeispiel ist eine gemeinsame Öffnung als Zugangsöffnung 9 und als Durchgangsöffnung für das verstellbare Reinigungselement 17 vorgesehen. Sofern das Verschlußglied 11 durch eine Klappe gebildet ist, kann das Scharnier 11a am vorderen Rand der Zugangsöffnung 9 vorgesehen sein.

Zur Reinigungsvorrichtung 1a gehört auch ein Vorratsbehälter B mit einer durch einen Deckel, insbesondere einen Schraubdeckel Ba, schließbaren Füllöffnung Bb für eine Waschflüssigkeit, insbesondere Wasser. Der vorzugsweise aus Kunststoff bestehende Vorratsbehälter B ist so angeordnet und durch nicht dargestellte Befestigungsmittel innerhalb der Karosserie 7 befestigt, daß seine Füllöffnung Bb und der Deckel durch die Zugangsöffnung 9 zugänglich sind. Beim vorliegenden Ausführungsbeispiel ist der Vorratsbehälter B neben dem Basisteil 6 angeordnet.

Des weiteren befindet sich beim vorliegenden Ausführungsbeispiel die Zugangsöffnung 9 in einem sich vom Scheinwerfer 2 nach vorne und zugleich nach unten gekrümmt erstreckenden Karosserieteil 19, z.B. ein Blech bzw. eine Kunststoffwand, wobei das Basisteil 6 mit dem oder den Einstellgliedern 4 neben der Bewegungsbahn des Reinigungselements 17 angeordnet ist, z.B. hinter dem nach vorne schräg aufwärts weisenden Reinigungselement 17, das am oberen Ende einer Stange angeordnet sein kann, die in einer unter dem Karosserieteil 19 angeordneten Führung 21 verschiebbar gelagert ist. Das Basisteil 6 mit dem wenigstens einen Einstellglied 4 kann rückseitig von der Bewegungsbahn des Reinigungselements 17 angeordnet sein, z.B. in einer solchen Schrägstellung, daß das Einstellglied 4 von Hand oder mittels des nicht dargestellten Werkzeugs handhabungsfreundlich zugänglich und verstellbar ist. Die Einstellglieder 4 und/oder die Verbindungsglieder 8 sind in ihrer Bewegung selbsthemmend oder feststellbar, so daß eine ungewollte Verstellung verhindert und die Positionierung bzw. Einstellung in der jeweils verstellten Position gesichert ist.

Es ist aus Gründen einer funktionssicheren und möglichst klemmungsfreien Einstellung des Scheinwerfers 2 vorteilhaft, drei dreieckförmig verteilt angeordnete Angriffspunkte 22a, 22b, 22c am Scheinwerfer 2 vorzusehen, an denen die Verbindungsglieder 8 am Scheinwerfer 2 angreifen, und den Scheinwerfer 2 um in diesen Angriffspunkten 22a,22b,22c angeordneten Gelenkpunkten, insbesondere allseitig schwenkbar, zu lagern. Beim Vorhandensein von drei Angriffspunkten steht eine Verstellbewegung der anderen nicht entgegen, wie es z.B. dann der Fall wäre, wenn vier Angriffspunkte vorhanden wären. Von den drei Angriffspunkten sind zwei Angriffspunkte, vorzugsweise die beiden unteren Angriffspunkte 22a, 22b, so ausgebildet, daß die zugehörigen Einstellglieder 4a, 4b an diesen Angriffspunkten 22a, 22b eine horizontale und quer zur Fahrtrichtung gerichtete Schwenkbewegung auf den Scheinwerfer 2 übertragen können und zwar bei Betätigung eines wahlweisen Einstellgliedes 4a, 4b, 4c. Dagegen ist der Angriffspunkt 22c so ausgebildet, daß er eine Schwenkbewegung in einer in der Fahrtrichtung des Scheinwerfers 2 gerichteten Vertikalebene übertragen kann und dabei um den Angriffspunkt 22a und/oder 22b schwenkbar ist. Die tatsächliche Schwenkrichtung ist dabei durch den zugehörigen Schwenkpunkt bestimmt. Dabei kann beim vorliegenden Ausführungsbeispiel der vordere untere Angriffspunkt 22a einer horizontalen Einstellung des Fernlichts dienen, der hintere untere Angriffspunkt 22b einer horizontalen Einstellung des Abblendlichts dienen und der obere hintere Angriffspunkt 22c einer vertikalen Einstellung des Abblendlichts dienen. Die beiden unteren Verbindungsglieder 8 können durch drehbar gelagerte Spindeln 23, 24 gebildet sein, die jeweils durch ein Kegelradgetriebe 24 antriebsmäßig mit einer sich quer zur Fahrtrichtung erstreckende Verstell- und Einstellspindel 25, 26 drehbar verbunden ist. Zwischen dem Scheinwerfer 2 und den Verstellspindeln 25, 26 ist jeweils ein Spindeltrieb vorgesehen, der die Verstellung in diesem Angriffspunkt 22a, 22b in der Querrichtung ermöglicht. Das obere Verbindungsglied 8c ist beim vorliegenden Ausführungsbeispiel durch einen sogenannten Bowdenzug 27 gebildet, dessen Hülle 28 an einem Karosseriefesten Bauteil 29 verbunden und daran abgestützt ist, während dessen Zug- oder Schubelement 31 im Gelenkpunkt 22c am Scheinwerfer 2, z.B. am Träger zugehörigen der Abblendlicht- bzw. Fernlichtlampe, angreift.

Im Rahmen der Erfindung kann das Basisteil 6 auch durch ein Getriebegehäuse 6a gebildet sein, in dem die jeweilige Drehbewegung des Einstellgliedes 4a, 4b in eine weiterführende Drehbewegung umgewandelt wird und die Drehbewegung des Einstellglieds 4c in eine Längsbewegung des Zug- und Schubelements 31 umgewandelt wird. Wie bereits beim Ausführungsbeispiel nach Fig. 1 ist auch bei dem nach Fig. 2 die die Einstellglieder 4a, 4b, 4c tragende Fläche des Basisteils bzw. Basisgehäuses 6a mit den Einstellgliedern 4a, 4b, 4c schräg nach vorne und oben gerichtet.

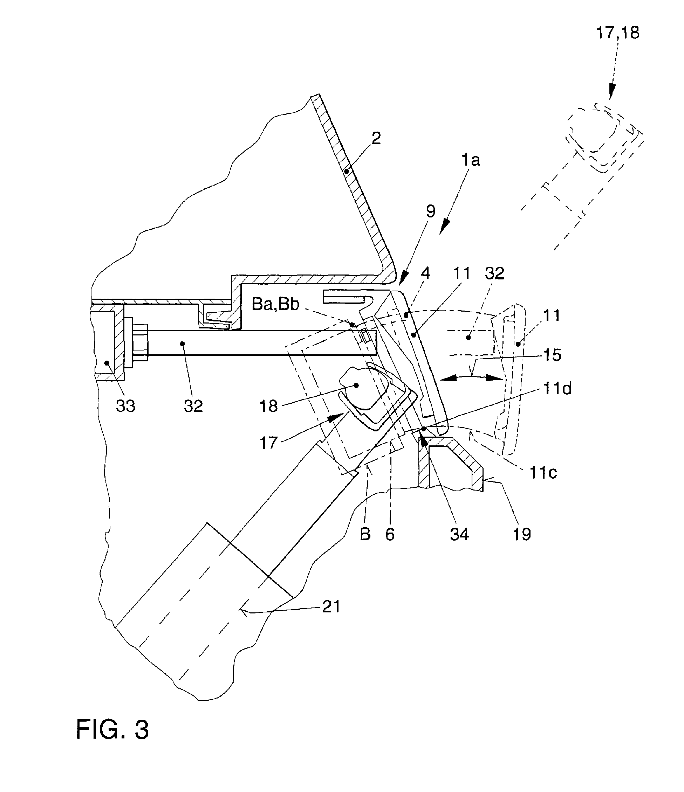

Wie das Ausführungsbeispiel nach Fig. 3 zeigt, bei dem gleiche oder vergleichbare Teile mit gleichen Bezugszeichen versehen sind, kann das Verschlussglied 11 durch eine Klappe gebildet sein, daß nicht um ein Gelenk schwenkbar sondern durch sich nach innen erstreckende nicht dargestellte Führungsglieder 11c in einer geraden oder vorzugsweise bogenförmigen Führung 11d so bewegbar ist, daß es in seiner strichpunktiert dargestellten Offenstellung von der Zugangsöffnung 9 nach außen beabstandet ist, wie es Fig. 3 zeigt. Bei einer bogenförmigen Führung 11d ist das Verschlußglied 11 um eine in einem Abstand vom Verschlußglied 11, hier horizontal und unterhalb von ihm innerhalb der Karosserie 7 verlaufende Schwenkachse schwenkbar gelagert. Der Antriebsmechanismus 15 für das Verschlussglied 11 kann durch eine Schubstange 32 gebildet sein, die sich neben dem Reinigungselement 17 in dessen inneren Parkstellung befindet und durch einen Antrieb 33 mit einer Führung so längs hin und her verschiebbar ist, daß das freie Schubstangenende sich in seiner Ausgangsstellung hinter dem Verschlussglied 11 in dessen Schließstellung befindet und in seiner vorgeschobenen Endstellung die Zugangsöffnung 9 durchdringt. Dabei kann die Schubstange 32 dadurch mit dem Verschlussglied 11 antriebsmäßig zusammenwirken, daß es zum Öffnen von innen gegen das Verschlussglied 11 stößt und es dadurch in seine Offenstellung bewegt. Zum Schließen des Verschlussgliedes 11 ist eine nicht dargestellte Rückholfeder vorgesehen, die an einem unbeweglichen Teil der Karosserie 7 abgestützt ist und am Verschlussglied 11 angreift.

Bei allen Ausführungsbeispielen ist die Scheinwerferreinigungsanlage bzw. Scheinwerferreinigungsvorrichtung 1b eine elektrische oder elektronische Steuereinrichtung S zugeordnet, die die einzelnen Schrittfolgen nach einem Programm steuert, nämlich Öffnen des Verschlußgliedes 11, Ausfahren des Reinigungselements17, Durchführung der Reinigung, hier Ausspritzen eines Reinigungsstrahles, für eine bestimmte Zeit, Einfahren des Reinigungselements 17 und Schließen des Verschlußgliedes 11. Zum Einleiten eines solchen Reinigungsvorgangs ist ein vom Fahrer betätigbares Betätigungselement E vorgesehen, bei dessen Betätigung der Reinigungsvorgang ausgelöst wird, wobei die Steuereinrichtung S den Reinigungsvorgang für den rechten und den linken Scheinwerfer 2 nacheinander steuert.

Für ein Öffnen der Zugangsöffnung 9 außerhalb eines Reinigungsprogramms, z. B. um sich einen Zugang durch die Zugangsöffnung 9 zu der Füllöffnung Bb oder den Einstellgliedern 4 zu verschaffen, läßt sich die Steuerung der Steuervorrichtung S durch die Eingabe eines entsprechenden Signals so verändern, daß das Verschlußglied 11 in eine teilweise oder vollständig offene Servicestellung geöffnet wird und für eine vorbestimmte Zeit in dieser Stellung verbleibt, die für den Zugang ausreicht, oder auf ein weiteres Signal hin wieder geschlossen wird. Hierfür kann ein weiteres Betätigungselement E1, z. B. im Bedienungsbereich des Fahrers, vorgesehen sein, das bei seiner Betätigung durch den Fahrer das Signal an die Steuereinrichtung S abgibt. Das zweite Signal kann z. B. durch eine zweite Betätigung des Betätigungselements E1 ausgelöst werden.

In der Servicestellung kann das Verschlußglied vollständig oder nur teilweise geöffnet sein, z. B. nur wenige mm, z. B. etwa 3 bis 5 mm. Im ersten Fall ist die Zugangsöffnung so groß, daß der Scheinwerfer 2 eingestellt oder Wasser kontrolliert oder nachgefüllt werden kann. Im zweiten Fall reicht die teilweise offene Stellung aus, das Verschlußglied 11 manuell zu ergreifen und mit oder ohne seinen Antrieb in seine Offenstellung weiter zu bewegen, in der z. B. eine Verrastungsvorrichtung 34 zum Arretieren in der Offenstellung vorgesehen sein kann. Im Rahmen der Erfindung ist es möglich, nach dem Fixieren des Verschlußgliedes 11 in seiner Offenstellung die Schubstange 32 zurückzuziehen, um mehr Platz im Bereich der Zugangsöffnung 9 zur Verfügung zu haben. Nach einer Einstellung des Scheinwerfers 2 oder nach einer Kontrolle oder Befüllung des Vorratsbehälters B wird das Verschlußglied 11 durch manuell direkt oder durch Auslösung des Schließsignals wieder geschlossen, wobei die Verrastungsvorrichtung 34 durch den Antrieb oder manuell gelöst oder überdrückt werden kann.

### BEZUGSZEICHENLISTE

- 1a: Reinigungsvorrichtung
- 1b: Einstellvorrichtung
- 2: Scheinwerfer
- 2a: Gehäuse
- 3: Fahrzeug
- 4: Einstellglied
- 4a: Einstellelement
- 4b: Einstellelement
- 4c: Einstellelement
- 6: Basisteil
- 6a: Getriebegehäuse
- 7: Karosserie
- 8: Verbindungsglieder
- 9: Zugangsöffnung
- 11: Verschlußglied
- 11a: Scharnier
- 11b: Antrieb
- 11c: Führungsteil
- 11d: Führung
- 12: Einstellteil
- 13: Reflektor
- 13a: Lampe
- 14: Angriffselement
- 15: Antriebsmechanismus
- 17: Reinigungselement
- 18: Spritzdüse
- 19: Karosserieteil
- 21: Führung
- 22a: Angriffspunkt
- 22b: Angriffspunkt
- 22c: Angriffspunkt
- 23: Spindel
- 24: Kegelradgetriebe
- 25: Verstell- oder Einstellspindel
- 27: Bowdenzug
- 28: Hülle
- 29: Bauteil
- 31: Zug- oder Schubelement
- 32: Schubstange
- 33: Antrieb
- 34: Verrastungsvorrichtung

- B: Vorratsbehälter
- Ba: Schraubdeckel
- Bb: Füllöffnung
- E: Betätigungselement
- E1: Betätigungselement
- s: Steuereinrichtung

## Patentansprüche

1. Reinigungsvorrichtung (1a) für einen Scheinwerfer (2) eines Kraftfahrzeugs, mit
einem Reinigungselement (17) für eine Scheibe des Scheinwerfers (2), das durch einen Antrieb (11b) zwischen einer Parkstellung, in der es hinter einer Öffnung (9) in der Karosserie (7) des Kraftfahrzeugs angeordnet ist, und einer Arbeitsstellung, in der es sich vor der Öffnung (9) befindet, bewegbar ist,
einem Verschlußglied (11) für die Öffnung (9), das durch einen Antrieb (15) zwischen einer Offenstellung und einer Schließstellung bewegbar ist, und
einer elektrischen Steuereinrichtung (S), die nach einer Betätigung eines ersten Betätigungselements (E) die Funktionsbewegungen und die Funktionszeit der Reinigungsvorrichtung (1a) steuert,
wobei die Steuereinrichtung (S) ein zweites Betätigungselement (E1) aufweist, bei dessen Betätigung die Steuereinrichtung (S) das Verschlußglied (11) in eine Servicestellung bewegt, in der das Verschlußglied (11) sich in seiner Offenstellung befindet oder sich in einer teilgeöffneten Stellung befindet, aus der es in die Offenstellung bewegbar ist, wobei in der Offenstellung die Öffnung (9) manuell zugänglich ist.

2. Reinigungsvorrichtung nach Anspruch 1, **dadurch gekennzeichnet,** daß der Scheinwerfer (2) durch eine in der Karosserie (7) angeordnete Einstellvorrichtung (1b) mit wenigstens einem Einstellelement (4) einstellbar ist, wobei das Einstellelement (4) durch die Zugangsöffnung (9) zugänglich angeordnet ist.

3. Reinigungsvorrichtung nach Anspruch 1 oder 2, **dadurch gekennzeichnet,** daß in der Karosserie (7) ein Vorratsbehälter (B) mit einer verschließbaren Füllöffnung (Bb) für eine Reinigungsflüssigkeit vorgesehen ist, wobei die Füllöffnung (Bb) durch die Zugangsöffnung (9) zugänglich angeordnet ist.

4. Reinigungsvorrichtung nach einem der vorherigen Ansprüche, **dadurch gekennzeichnet**, daß der Antrieb (11b) für das Reinigungselement (17) durch eine Schubstange (32) gebildet ist und ein Schließglied zum Schließen des Verschlußgliedes (11) vorgesehen ist.

5. Reinigungsvorrichtung nach Anspruch 4, **dadurch gekennzeichnet**, daß das Schließglied durch eine Feder gebildet ist.

6. Reinigungsvorrichtung nach einem der vorherigen Ansprüche, **dadurch gekennzeichnet**, daß das Verschlußglied (11) in der teilgeöffneten Stellung nur wenige mm, insbesondere etwa 3 bis 5 mm, von seiner Schließstellung abgehoben ist.

7. Reinigungsvorrichtung nach einem der vorherigen Ansprüche, **dadurch gekennzeichnet**, daß das Verschlußglied (11) in seiner Offenstellung durch eine Verrastungsvorrichtung (34) verrastbar ist.

8. Reinigungsvorrichtung nach Anspruch 7, **dadurch gekennzeichnet**, daß die Verrastungsvorrichtung (34) in Richtung auf die Schließstellung des Verschlußgliedes (11) durch einen Antrieb oder manuell überdrückbar ist.

9. Reinigungsvorrichtung nach einem der vorherigen Ansprüche, **dadurch gekennzeichnet,** daß das Verschlußglied (11) zeitverzögert oder nach manueller Auslösung eines Schließsignals durch die Steuereinrichtung (S) wieder geschlossen wird.

10. Einstellvorrichtung nach einem der vorherigen Ansprüche, **dadurch gekennzeichnet**, daß das Verschlußglied (11) durch eine Klappe gebildet ist, die um eine vorzugsweise an ihrer unteren und/oder vorderen Randkante verlaufende Schwenkachse schwenkbar gelagert ist oder um eine innerhalb der Karosserie (7) und insbesondere horizontal verlaufende Schwenkachse schwenkbar gelagert ist.

11. Reinigungsvorrichtung nach einem der vorherigen Ansprüche, **dadurch gekennzeichnet,** daß eine Einstellvorrichtung (1b) und ein Vorratsbehälter (B) vorgesehen sind und das wenigstens eine Einstellglied (4) und die Füllöffnung (Bb) durch die Zugangsöffnung (9) zugänglich sind und vorzugsweise nebeneinander angeordnet sind.
